# EUROPEAN PATENT APPLICATION

(11) **EP 4 513 656 A1**
(43) Date of publication of application: **26.02.2025**
(21) Application number: 24195782.8
(22) Date of filing: 22.08.2024
(51) Int. Cl.: H01M 50/507, H01M 10/48, H01M 50/287, H01M 50/519

(54) **HARNESS ISOLATION PLATE, INFORMATION SAMPLING COMPONENT AND BATTERY MODULE**

(30) Priority: 25.08.2023 CN 202322309013 U; 25.08.2023 CN 202311086309
(71) Applicant: Eve Energy Co., Ltd., Huizhou, Guangdong 516006 (CN)
(72) Inventor: HU, Wenbin, Huizhou (CN)
(74) Representative: Murgitroyd & Company

(57) **Abstract**

Harness isolation plate, information sampling component, and battery module. The harness isolation plate includes a plurality of isolation plate units (10), the plurality of isolation plate units are sequentially connected in a first direction (X); a connecting structure provided between every two isolation plate units, wherein the connecting structure includes a first connecting member (21) and a second connecting member (22), the first connecting member includes a first snap (211), the second connecting member includes a second snap (222), and the second snap is matched with the first snap.

## Description

### BACKGROUND OF DISCLOSURE

### 1. Field of the Disclosure

The present disclosure relates to a technical field of batteries, and in particular to harness isolation plates, an information sampling components, and battery modules.

### 2. Description of the Related Art

With an increase of requirements for new energy endurance mileage, a power demand for a battery system increases, which results in an increase in a size of a battery module. At the same time, a size of an information sampling component of the module is also getting larger and larger, and a size of a harness isolation plate of the module is also getting larger and larger. For large-sized harness isolation plate of the module, an integral injection molding is used for most designs.

However, the above-mentioned structure is prone to cause a size of a mold to be too large, so that a processing cycle of the mold is too long and a production cost thereof is too high, and at the same time, the size of the mold is too large for the production, thereby increasing the difficulty in the production of devices.

### SUMMARY

### 1. Technical problem

The present disclosure provides harness isolation plates, information sampling modules, and battery modules to solve at least one of the above technical problems.

### 2. Technical solution

The present disclosure provides a harness isolation plate including a plurality of isolation plate units, the plurality of isolation plate units are sequentially connected in a first direction; a connecting structure provided between every two adjacent isolation plate units, the connecting structure includes a first connecting member and a second connecting member, the first connecting member and the second connecting member are respectively disposed at ends of two adjacent isolation plate units facing each other, the first connecting member is provide with a first mounting groove, the first connecting member further includes a first snap, the first snap is provided in the first mounting groove and is spaced from an inner wall of the first mounting groove extending in a third direction, the first snap is capable of being deformed in the third direction with respect to the first mounting groove, the second connecting member includes a receiving portion and a second snap, a projection of the second snap in a second direction is located on the receiving portion, and the second snap is matched with the first snap, and the first direction, the second direction and the third direction are different in orientation; when the first connecting member and the second connecting member are connected to each other, the receiving portion is located in the first mounting groove, and the first snap is snap-fitted with the second snap by swinging.

The present disclosure further provides an information sampling component including the harness isolation plate; a busbar provided on the isolation plate units of the harness isolation plate, two ends of the busbar are respectively fixed to two adjacent isolation plate units; a flexible printed circuit disposed on the harness isolation plate, the flexible printed circuit is electrically connected to the busbar.

The present disclosure further provides a battery module including a battery pack and the above-described information sampling component, and the battery pack is electrically connected to the information sampling component.

### 3. Beneficial effect

An advantageous effect of the present disclosure is that the harness isolation plate provided in the present disclosure is formed by a plurality of isolation plate units, and the plurality of isolation plate units are detachably connected by the connecting structure, so that a size of a mold of the harness isolation plate may be reduced.

The battery module provided in the present disclosure may reduce the production cost.

### BRIEF DESCRIPTION OF THE DRAWINGS

FIG. 1 is a perspective view of an information sampling component according to an embodiment of the present disclosure;
FIG. 2 is a perspective view of a first connecting member according to an embodiment of the present disclosure;
FIG. 3 is a perspective view of a second connecting member according to an embodiment of the present disclosure;
FIG. 4 is an enlarged schematic diagram of a region A shown in FIG. 1;
FIG. 5 is a front view of a harness isolation plate according to another embodiment of the present disclosure;
FIG. 6 is a perspective view of a fixing member according to an embodiment of the present disclosure;
FIG. 7 is a perspective view of a cover according to an embodiment of the present disclosure;
FIG. 8 is a perspective view of a base according to an embodiment of the present disclosure;
FIG. 9 is a perspective view of a receiving member according to an embodiment of the present disclosure.

### List of reference signs:

10. isolation plate unit; 21. first connecting member; 211. first snap; 2111. first section; 2112, second section; 212. first mounting groove; 22. second connecting member; 221. receiving portion; 222. second snap; 2221, third section; 2222, fourth section; 31. first protruding portion; 32. first matching portion; 40. busbar; 41. flexible printed circuit; 50. housing; 501. accommodating chamber; 512. opening; 52. cover; 131. first hook; 5311. first connecting section; 5312. second connecting section; 532. second hook; 5321, third connecting section; 5322, fourth connecting section; 533. avoidance groove; 534, protrusion; 53. base; 531. guide groove; 542. first snap groove; 543. second snap groove; 544, recessing part; 51. receiving member; 60. first limit structure; 61. limit protrusion; 62. limit groove; 70. second limit structure; X, first direction; Y, second direction; Z, third direction.

### DETAILED DESCRIPTION OF EMBODIMENTS

In the description of the present disclosure, unless otherwise expressly indicated and defined, the terms "connecting", "bonding", "fixing", and the like, are to be understood in a broad sense, for example, as a fixed connection or a detachable connection, as a whole, as a mechanical connection or an electrical connection, as a direct connection or indirect connection by means of an intermediate medium, or as an internal communication of two elements or an interaction of the two elements. The specific meaning of the above terms in the present disclosure may be understood by one of ordinary skill in the art as the case may be.

In the present disclosure, unless otherwise expressly indicated and defined, the expression of a first feature "on" or "beneath" a second feature may include a case where the first feature and the second feature are in direct contact, or a case where the first feature and the second feature are not in direct contact but through an additional feature therebetween. In addition, the expression of the first feature "on", "above", or "over" the second feature may include a case where the first feature is directly above and obliquely above the second feature, or merely indicate that a level of the first feature is higher than that of the second feature. The expression of the first feature "beneath", "under", or "below" the second feature may include a case where the first feature directly under and obliquely under the second feature, or merely indicate that the level of the first feature is lower than that of the second feature.

In the description of the embodiment, the terms "upper", "lower", "right", etc., indicating orientation or positional relationships are based on the orientation or positional relationships shown in the drawings and are intended only for convenience of description and simplification of operation, and do not indicate or imply that the device or element referred to must have a particular orientation, be constructed and operated in a particular orientation, and therefore they cannot be construed as a limitation on the present disclosure. In addition, the terms "first" and "second" are used merely for the purpose of distinguishing and not in a particular sense.

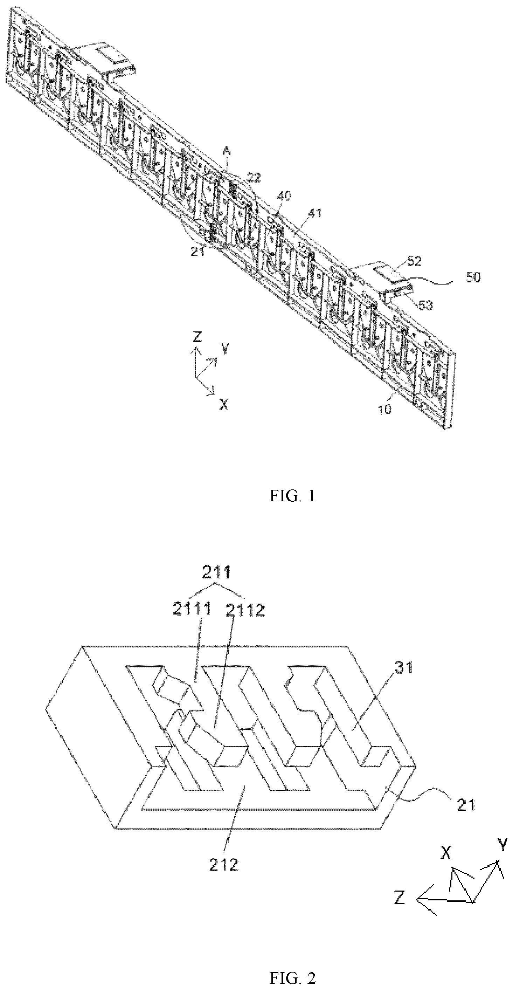

As shown in FIG. 1, an embodiment of the present disclosure provides a harness isolation plate including a plurality of isolation plate units 10 and a connecting structure. The plurality of isolation plate units 10 are sequentially connected in a first direction, and the connecting structure is provided between every two adjacent isolation plate units 10. The connecting structure includes a first connecting member 21 and a second connecting member 22. The first connecting member 21 and the second connecting member 22 are respectively located at ends of the two adjacent isolation plate units 10 facing each other. A first mounting groove 212 is formed in the first connecting member 21. The first connecting member 21 further includes a first snap 211, the first snap 211 is provided in the first mounting groove 212 and is spaced from an inner wall extending in a third direction of the first mounting groove 212, and the first snap 211 may be deformed in the third direction with respect to the first mounting groove 212. The second connecting member 22 includes a receiving portion 221 and a second snap 222, a projection of the second snap 222 in the second direction is located on the receiving portion 221, and the second snap 222 is matched with the first snap 211. There is an included angle between extending lines of every two of the first direction, the second direction and the third direction. When the first connecting member 21 and the second connecting member 22 are connected to each other, the receiving portion 221 is located in the first mounting groove 212, and the first snap 211 is snap-fitted with the second snap 222 by swinging.

According to a technical solution of the present disclosure, the harness isolation plate is configured to be formed of the plurality of isolation plate units 10, and the plurality of isolation plate units 10 are detachably connected by a connecting structure, so that a size of a mold for the harness isolation plate may be reduced, and therefore processing cycle, processing cost and processing difficulty of the mold may be reduced. At the same time, the connecting structure includes the first connecting member 21 and the second connecting member 22, and rapid assembly and disassembly between the components may be realized by a snap fit between the first connecting member 21 and the second connecting member 22, thereby reducing the disassembly and assembly difficulty between the isolation plate units 10, and improving the disassembly and assembly efficiency of the device.

In an embodiment of the present disclosure, X is a length direction of the harness isolation plate, Y is a width direction of the harness isolation plate, and Z is a height direction of the harness isolation plate. The first snap 211 is elastic, and when the first snap 211 is assembled with the second snap 222, the first snap 211 and the second snap 222 are in an interference fit, so that the first snap 211 may be elastically deformed to swing in the third direction. After the first snap 211 and the second snap 222 are assembled with each other, the first snap 211 returns to an original state under the elastic action, and is snap-fitted with and in engagement with the second snap 222.

At the same time, the second snap 222 in the present disclosure is fixedly connected to the receiving portion 221, so that only the first snap 211 is elastically deformed during installation, thereby ensuring strength after the first connecting member 21 is connected to the second connecting member 22. Of course, the second snap 222 may be provided not to be fixedly connected to the receiving portion 221, so that both the first snap 211 and the second snap 222 are relatively elastically deformed during assembly, and thus an assembly rate of the first snap 211 and the second snap 222 may be improved. Specific setting situation should be selected according to use requirements of users, as long as the connection requirements between the components may be satisfied.

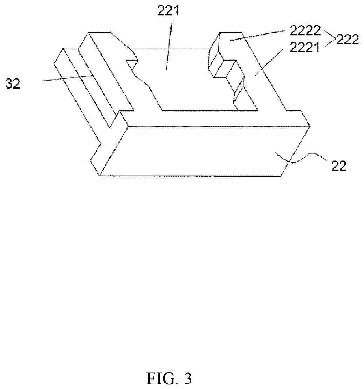

As shown in FIGS. 2 and 3, the first snap 211 has a first section 2111 and a second section 2112 that are sequentially connected and arranged at an included angle, the second snap 222 has a third section 2221 and a fourth section 2222 that are sequentially connected and arranged at an included angle, the first section 2111 and the third section 2221 extend in a first direction, and the second section 2112 and the fourth section 2222 extend in opposite directions. When the first connecting member 21 and the second connecting member 22 are connected to each other, the second section 2112 and the fourth section 2222 are snap-fitted with each other. In this way, it is possible to ensure that when the first snap 211 and the second snap 222 are assembled, the first snap 211 and the second snap 222 are perfectly fitted with each other by the mutual snap-fit of the second section 2112 and the fourth section 2222, so as to improve the stability of the connection between the components.

Specifically, in an embodiment of the present disclosure, the first section 2111 and the third section 2221 have the same structure, and the second section 2112 and the fourth section 2222 also have the same structure, so that the assembly fitting degree of the first snap 211 and the second snap 222 may be further improved, and the structural strength after the first snap 211 and the second snap 222 are connected may be improved.

Further, each of a junction of the first section 2111 and the first connecting member 21 and a junction of the third section 2221 and the second connecting member 22 is provided with a variable diameter section, and a width of the variable diameter section decreases gradually from the first connecting member 21 toward the first section 2111 and from the second connecting member 22 toward the third section 2221. By providing the above-mentioned structure, the variable diameter section may improve the structural strength when the first section 2111 is connected with the first connecting member 21 and the third section 2221 is connected with the second connecting member 22, thereby avoiding the phenomenon that the first snap 211 and the second snap 222 are broken due to excessive stress when the first snap 211 and the second snap 222 are connected and fitted with each other, further ensuring the stability of the first snap 211 and the second snap 222, and facilitating the normal operation of the device.

Further, the first connecting member 21 includes at least two first snaps 211 arranged at intervals in a third direction, and the first snaps 211 are symmetrically arranged along the first direction. In this way, the connection stability of the first connecting member 21 and the second connecting member 22 may be further improved by the two snaps, and the fact that the two snaps are arranged symmetrically also makes it possible for the first connecting member 21 and the second connecting member 22 to be more evenly stressed when connected. In an embodiment of the present disclosure, the second sections 2112 of the two first snaps 211 are provided opposite to each other, and alternatively, the second sections 2112 of the two first snaps 211 may also be provided to face each other, as long as the connection requirements of the device may be satisfied.

Specifically, a limit structure is further disposed between the first connecting member 21 and the second connecting member 22, the limit structure is capable of limiting the displacement of the first connecting member 21 relative to the second connecting member 22 in the second direction when the receiving portion 221 is located in the first mounting groove 212. By providing the above-mentioned structure, after the first connecting member 21 and the second connecting member 22 are connected, the relative displacement between the first connecting member 21 and the second connecting member 22 can be prevented by the limiting structure, so that a risk of falling off of adjacent isolation plate units 10 during the operation of the device may be prevented. Thus, the normal operation of the device can be ensured to meet the use requirements of users.

Further, the first mounting groove 212 has a first protruding portion 31 on an inner wall extending in the first direction thereof, a surface of the first protruding portion 31 protrudes from the inner wall of the first mounting groove 212 in the third direction, a side wall of the second snap 222 at a side away from the first snap 211 cooperates with a side wall of the receiving portion 221 close to the second snap 222 to form the first matching portion 32, and the first protruding portion 31 cooperates with the first matching portion 32 to form the limit structure. In this way, the limit requirement of the device can be satisfied, and at the same time, because of the above-mentioned simple structure, it can not only facilitate the processing of the components, but also does not occupy additional space, so that the production cost can be reduced, the overall volume of the device can be reduced, and the miniaturization of the device can be facilitated.

In the present disclosure, a projection of the first snap 211 on the first connecting member 21 in the third direction overlaps with the first protruding portion 31. Of course, in other embodiments of the present disclosure, the first snap 211 may be provided in a form that is not coplanar with the first protruding portion 31 in the third direction, a specific setting case should be selected according to the use requirement of the device, so long as the assembly requirement of the device can be satisfied, and thus, the practicality and application range of the device can be improved.

Meanwhile, in the present embodiment, projection portions of the first snap 211 and the first protruding portion 31 in the first mounting groove 212 in the second direction are hollowed out, so that it may not only reduce an overall weight of the device to realize light weight requirement of the device, but also reduce the amount of materials used in the production process to further reduce the production cost of the device, thereby facilitating the mass production of the device.

When the first snap 211 and the second snap 222 are assembled, it may be realized that the position of the two adjacent isolation plate units 10 in the first direction and the third direction is restrained, so that the two adjacent isolation plate units 10 may be prevented from being displaced from each other as much as possible, thereby ensuring the structural stability of the device after assembly.

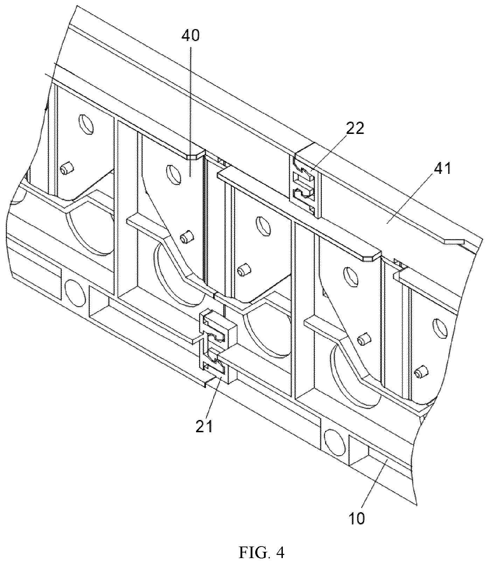

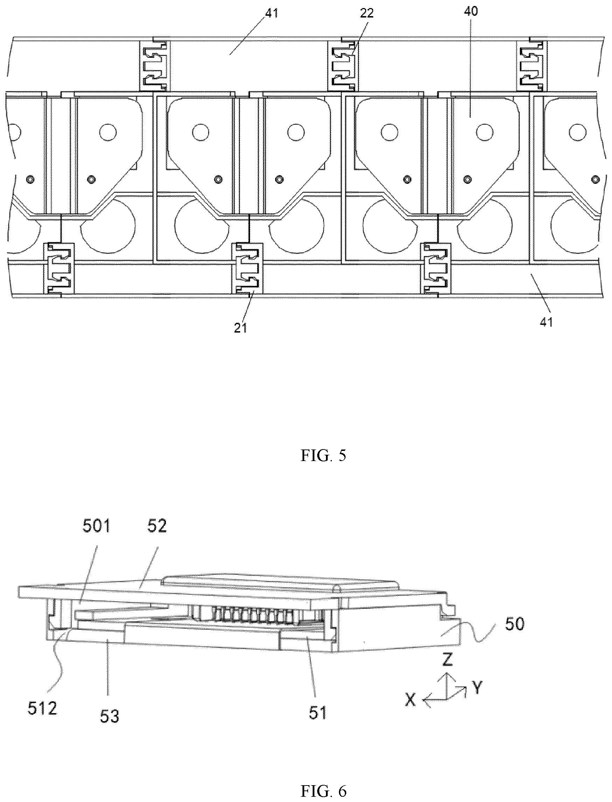

As shown in FIGS. 4 and 5, there are a plurality of connecting structures between each two adjacent isolation plate units 10, and the plurality of connecting structures are arranged at intervals in the third direction. In this way, stability after connection between adjacent isolation plate units 10 may be ensured as much as possible, and structural strength after connection may be ensured. Meanwhile, in the present disclosure, an upper end position of one of the adjacent isolation plate units 10 is provided with a first connecting member 21, a lower end position of the one of the adjacent isolation plate units 10 is provided with a second connecting member 22, an upper end position of another one of the adjacent isolation plate units 10 is correspondingly provided with a second connecting member 22, and a lower end position of the another of the adjacent isolation plate units 10 is correspondingly provided with a first connecting member 21.

As shown in FIG. 1, another embodiment of the present disclosure provides an information sampling component including the above harness isolation plate, a plurality of busbars 40, and a flexible printed circuit 41. The plurality of busbars 40 are provided at intervals in the first direction on the isolation plate units 10 of the harness isolation plate, both ends of each of the busbars 40 are fixed to two adjacent isolation plate units 10 respectively, the flexible printed circuit 41 is provided on the harness isolation plate, and the flexible printed circuit 41 is electrically connected to the busbar 40. In an embodiment of the present disclosure, the two ends of the busbar 40 are fixedly connected to the two adjacent isolation plate units 10 by hot riveting respectively, so that not only can the connection strength of the two adjacent isolation plate units 10 be further improved, but also the connection accuracy of the isolation plate units 10 may be improved by mutual positioning between hot riveting holes in the busbar 40 and hot riveting posts of the two adjacent isolation plate units 10, so as to reduce a size error during the assembly process, thereby improving the structural consistency of the plurality of isolation plate units 10 after assembly.

Of course, in other embodiment of the present disclosure, the busbar 40 may be connected with the isolation plate unit 10 in a threaded connection, a snap connection, or the like, as long as the assembly requirements of the device may be satisfied.

As shown in FIGS. 6 to 8, the information sampling component further includes a fixing member, the fixing member is provided on the harness isolation plate and used for fixing the module sampling connector. The fixing member includes a receiving member 51 for being fixedly connected to the module sampling connector, a cover 52, and a base 53, the cover 52 is provided above the base 53, the base 53 has a guide groove 531 therein, the guide groove 531 extends in the second direction, and the receiving member 51 is movably provided in the guide groove 531. During the assembling process, the module sampling connector is fixedly connected to the receiving member 51, and then the receiving member 51 is pushed to move along the guide groove 531, so that the receiving member 51 is integrally installed in the base 53. In this way, the module sampling connector may be protected by the fixing member, so as to prevent a short circuit of the module sampling connector due to the case where a droplet directly contacts with the module sampling connector during operation, thereby enabling the module sampling connector to operate stably, and facilitating normal operation of the device.

Specifically, the cover 52 is detachably connected to the base 53, and the base 53 is integrally formed with the harness isolation plate. By providing the above-mentioned structure, disassembly and installation between the cover 52 and the base 53 are facilitated, so that the disassembly and installation efficiency of the assembly may be improved, and at the same time, the integrated structure also facilitates the improvement of the connection strength between the base 53 and the harness isolation plate, thereby facilitating the stability of the device during operation.

In yet another embodiment of the present disclosure, a battery module is provided and includes a battery pack and an information sampling component as described above, and the battery pack is electrically connected to the information sampling component. The structure of the information sampling component is described in the foregoing embodiment, and details are not described herein.

As shown in FIG. 6, the fixing member further includes a first limit structure 60 disposed between the receiving member 51 and a chamber wall of an accommodating chamber 501. When the receiving member 51 is in an initial position, the receiving member 51 may be fixedly connected to the sampling connector. When the receiving member 51 is in a mounting position, the first limit structure 60 may limit a displacement of the receiving member 51 relative to the accommodating chamber 501 in the second direction, and an extension line of the first direction and the second direction are perpendicular to each other.

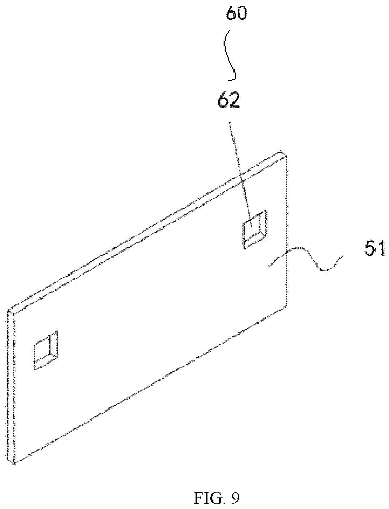

As shown in FIG. 9, the first limit structure 60 includes a limit protrusion 61 and a limit groove 62, the limit protrusion 61 is provided on one of a bottom wall of the accommodating chamber 501 or a side of the receiving member 51 corresponding to the bottom wall, and the limit groove 62 is provided on the other of the bottom wall of the accommodating chamber 501 and the side of the corresponding bottom wall of the receiving member 51. When the receiving member 51 is in the mounting position, the limit protrusion 61 and the limit groove 62 are snap-fitted with each other to limit the displacement of the receiving member 51. In this way, the limit demand of the first limit structure 60 to the receiving member 51 may be satisfied, and the above-mentioned structure is simple and easy to process, so that production difficulty of the components may be reduced, thereby reducing production cost of the device.

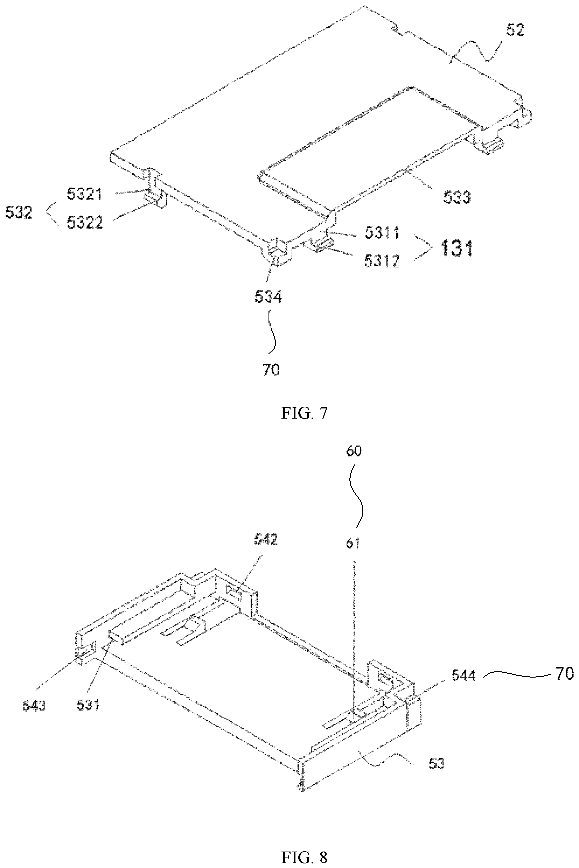

As shown in FIGS. 7 and 8, a housing 50 includes the cover 52 and the base 53. The cover 52 has a first connecting portion, the base 53 has a second connecting portion, the cover 52 is detachably connected to the base 53 through mutual cooperation between the first connecting portion and the second connecting portion, the cover 52 and the base 53 are connected to form the accommodating chamber 501 and an opening 512, and the limit protrusion 61 is located on the base 53. The housing 50 is provided in a split structure, and when the sampling connector needs to be installed and disassembled, the cover 52 is detached from the base 53, and then the receiving member 51 may be detached from or connected to the sampling connector, so that the disassembly and installation of the device may be facilitated, thereby improving the replacement efficiency of the device.

In an embodiment of the present disclosure, the limit protrusion 61 is in particular an elastic boss structure, a height of a boss portion of the elastic boss is higher than a height of the bottom wall of the base 53, the limit groove 62 is in particular a rectangular groove hole, and the rectangular groove hole extends through the receiving member 51. When the receiving member 51 is moved in the accommodating chamber 501, the receiving member 51 applies downward pressure on the elastic boss, so that the boss is bent downward and deformed, and when the receiving member 51 continues to move to the mounting position, the elastic boss may spring back to the initial state, and the elastic boss may snap-fit with the rectangular groove hole, so that movement of the receiving member 51 may be restrained, and the mounting stability of the receiving member 51 in the mounting position may be ensured. The elastic boss may be integrally formed with the bottom plate, so that the mounting of the receiving member 51 may be completed without hot riveting or rivets, and the disassembly of the receiving member 51 is also convenient, so that the disassembly and installation efficiency of the receiving member 51 is improved, and the above-mentioned structure is simple, which reduces the production cost of the device.

Further, the guide groove 531 is provided at an inner wall of a first side or a second side of the base 53 extending in the second direction, or guide grooves 531 are provided at the inner walls of both sides of the base 53 extending in the second direction. The guide groove 531 extends in the second direction, and the receiving member 51 may move along the guide groove 531. In an embodiment of the present disclosure, each of the inner walls of both sides of the base 53 extending in the second direction is provided with the guide groove 531, so that the guide grooves 531 at both sides may guide movement of the receiving member 51 during the installation of the receiving member 51, thereby reducing a possibility of offsetting of the receiving member 51 when the receiving member 51 moves, so as to maintain a linear movement of the receiving member 51 for improving the efficiency of the movement of the receiving member 51 and facilitating movement operation of the receiving member 51 by a user.

Specifically, the first connecting portion includes a first hook 131 provided at a side of the cover 52 away from the opening 512, and the second connecting portion includes a first snap groove 542 provided corresponding to the first hook 131, and the first hook 131 is snap-fitted with the first snap groove 542 to limit displacement of the cover 52 in the first direction relative to the base 53. Here, in an embodiment of the present disclosure, the first snap groove 542 is provided in a side wall of the base 53 at a side away from the opening 512, and the first snap groove 542 is provided through the side wall of the base 53 in the second direction. By providing the above-described structure, the first hook 131 is convenient for being snap-fitted with the first snap groove 542, and the first snap groove 542 has a sufficient depth to be connected to the first hook 131, so that the strength of the connection between the first snap groove 542 and the first hook 131 may be improved, and thus the stability of the connection between the cover 52 and the base 53.

Alternatively, the first snap groove 542 may be provided in a semi-slotted form, and a groove opening of the first snap groove 542 is provided corresponding to the first hook 131. The specific arrangement situation should be selected according to the use environment of the device, so that the applicability and the application range of the device may be improved to meet the use requirements of the user in different scenarios.

In an embodiment of the present disclosure, the first connecting portion further includes second hooks 532, and the second hooks 532 are provided on side walls of a first side and a second side extending in the second direction of the cover 52. The second connecting portion further includes second snap grooves 543 provided corresponding to the second hooks 532, and the second hooks 532 are snap-fitted with the second snap grooves 543 to limit displacement of the cover 52 relative to the base 53 in the third direction. By providing the above-described structure, after the first hook 131 is snap-fitted with the first snap groove 542, the second hook 532 is snap-fitted with the second snap groove 543 to limit the displacement of the cover 52 and the base 53 in the third direction, so that a phenomenon that the cover 52 falls off, which is caused by the relative sliding of the cover 52 and the base 53 after connection, may be prevented, and the stability of the cover 52 in connection with the base 53 may be further improved.

At the same time, the first hook 131 and the second hook 532 in the present disclosure are formed integrally with the cover 52, so that the processing difficulty of the device may be reduced, thereby reducing the production cost of the device, and improving an overall appearance of the cover 52 to improve an overall image of the product.

Further, the first connecting portion includes a plurality of first hooks 131, and the second connecting portion includes a plurality of first snap grooves 542, the plurality of first hooks 131 and the plurality of first snap grooves 542 are arranged at intervals in the first direction, and the first hooks 131 are provided in one-to-one correspondence with the first snap grooves 542. In this way, the possibility of displacement of the cover 52 with respect to the base 53 in the first direction may be further reduced, and the strength of the connection between the cover 52 and the base 53 may be increased to prevent separation of the cover 52 from the base 53 during use. In the present disclosure, there are two first hooks 131, so that it may not only satisfy the use requirement of the device, but also correspondingly save the production cost of the device, thereby facilitating the batch production of the device.

Specifically, the first hook 131 includes a first connecting section 5311 and a second connecting section 5312 that are sequentially connected and angularly arranged, the second hook 532 includes a third connecting section 5321 and a fourth connecting section 5322 that are sequentially connected and angularly arranged, and an angle between the first connecting section 5311 and the second connecting section 5312 is the same as an angle between the third connecting section 5321 and the fourth connecting section 5322. In this way, the processing of the assemblies in the production process is facilitated, thereby further reducing the processing difficulty of the device to reduce the production cost of the device. In the present embodiment, the included angle between the first connecting section 5311 and the second connecting section 5312 and the included angle between the third connecting section 5321 and the fourth connecting section 5322 are both set to 90°. Alternatively, in other embodiments, the included angle may be set to other angles, such as 70°, 80°, 120°, or the like, as long as the assembly requirements of the device may be satisfied. Of course, the included angle between the first connecting section 5311 and the second connecting section 5312 and the included angle between the third connecting section 5321 and the fourth connecting section 5322 may also be set to different angles, and the specific arrangement situation should be selected according to the use environment of the device, so that the applicability and the application range of the device may be further improved.

Further, the information sampling component further includes a second limit structure 70 located between the cover 52 and the base 53, the second limit structure 70 is capable of limiting displacement of the cover 52 relative to the base 53 in the second direction. The second limit structure 70 includes a protrusion 534 and a recessing part 544, the protrusion 534 is located at a side of the cover 52 away from the opening 512, the protrusion 534 extends in the same direction as the first connecting section 5311, the recessing part 544 is located on the base 53 and is provided corresponding to the protrusion 534, and the recessing part 544 is formed by fitting two side walls of the base 53. After the cover 52 is connected to the base 53, the protrusion 534 and the recessing part 544 cooperate with each other to limit the displacement of the cover 52 and the base 53 in the second direction, so that it not only can satisfy the limit requirement of the device, but also can reduce the processing cost of the device.

Specifically, the inner wall of the cover 52 at a side facing the base 53 also includes an avoidance groove 533, and when the receiving member 51 is in the mounting position, a part of the sampling connector is located in the avoidance groove 533. Since the sampling connector is arranged to protrude from the receiving member 51 after the sampling connector and the receiving member 51 are mounted and fixed, the avoidance groove 533 is provided in the cover 52, so that the receiving member 51 may be prevented from interfering with the cover 52 when the receiving member 51 is in the mounting position, thereby protecting the structure of the sampling connector itself and prolonging the service life of the sampling connector.

In the present disclosure, the cover 52 is firstly snap-fitted with the first snap groove 542 by the first hook 131, and the user presses a side of the cover 52 away from the opening 512 so that the protrusion 534 is fitted with the recessing part 544, and then presses a side of the cover 52 close to the snap so that the second hook 532 is snap-fitted with the second snap groove 543 to complete the installation of the cover 52.

## Claims

1. A harness isolation plate, **characterized by** comprising:
a plurality of isolation plate units (10) connected sequentially in a first direction; and
a connecting structure disposed between every two adjacent isolation plate units (10) of the plurality of isolation plate units (10), wherein the connecting structure comprises a first connecting member (21) and a second connecting member (22), and the first connecting member (21) and the second connecting member (22) are respectively disposed at ends of two adjacent isolation plate units (10) facing each other;
wherein the first connecting member (21) is provided with a first mounting groove (212), the first connecting member (21) further comprises a first snap (211), the first snap (211) is provided in the first mounting groove (212) and is spaced from an inner wall of the first mounting groove (212) extending in a third direction, and the first snap (211) is capable of being deformed in the third direction with respect to the first mounting groove (212);
wherein the second connecting member (22) comprises a receiving portion (221) and a second snap (222), a projection of the second snap (222) in a second direction is located on the receiving portion (221), and the second snap (222) is matched with the first snap (211);
wherein there is an included angle between extending lines of every two of the first direction, the second direction and the third direction; and
wherein when the first connecting member (21) and the second connecting member (22) are connected to each other, the receiving portion (221) is located in the first mounting groove (212), and the first snap (211) and the second snap (222) are snap-fitted with each other.

2. The harness isolation plate according to claim 1, **characterized in that** the first snap (211) has a first section (2111) and a second section (2112) that are connected in sequence and arranged at an included angle, the second snap (222) has a third section (2221) and a fourth section (2222) that are connected in sequence and arranged at an included angle, the first section (2111) and the third section (2221) extend in the first direction, the second section (2112) and the fourth section (2222) extend in opposite directions, and the second section (2112) and the fourth section (2222) are snap-fitted with each other when the first connecting member (21) and the second connecting member (22) are connected to each other; and
the first connecting member (21) comprises at least two first snaps (211) arranged at intervals in the third direction, and the first snaps (211) are symmetrically arranged along the first direction.

3. The wiring harness isolation plate according to claim 1 or 2, **characterized in that** a limit structure is further provided between the first connecting member (21) and the second connecting member (22), and the limit structure is capable of limiting displacement of the first connecting member (21) in the second direction relative to the second connecting member (22) when the receiving portion (221) is located in the first mounting groove (212).

4. The harness isolation plate according to claim 3, **characterized in that** an inner wall of the first mounting groove (212) extending in the first direction is provided with a first protruding portion (31), a surface of the first protruding portion (31) is arranged to protrude from the inner wall of the first mounting groove (212) in the third direction, a side wall of the second snap (222) at a side away from the first snap (211) cooperates with a side wall of the receiving portion (221) close to the second snap (222) to form a first matching portion (32), and the first protruding portion (31) cooperates with the first matching portion (32) to form the limit structure.

5. An information sampling component, **characterized in that** the information sampling component comprises:
the harness isolation plate according to any one of claims 1 to 4;
a plurality of busbars (40) arranged at intervals in the first direction on the isolation plate units (10) of the harness isolation plate, wherein two ends of each of the busbars (40) are respectively fixed to two adjacent isolation plate units (10); and
a flexible printed circuit (41) provided on the harness isolation plate, wherein the flexible printed circuit (41) is electrically connected to the busbar (40).

6. The information sampling component according to claim 5, **characterized in that** the information sampling component further comprises a fixing member disposed on the harness isolation plate, and the fixing member is configured to fix a module sampling connector.

7. The information sampling component according to claim 6, **characterized in that** the fixing member comprises:
a receiving member (51) configured to be fixedly connected to the module sampling connector;
a cover (52);
a base (53), wherein the cover (52) is provided on the base (53), the base (53) has a guide groove (531), the guide groove (531) extends in the second direction, and the receiving member (51) is movably provided in the guide groove (531),
wherein the cover (52) is detachably connected to the base (53), and the base (53) is integrally formed with the harness isolation plate.

8. The information sampling component according to claim 6, **characterized in that** the fixing member comprises:
a housing (50) having an accommodating chamber (501), wherein the housing (50) is provided with an opening (512) communicating with the accommodating chamber (501), and the opening (512) extends in the first direction;
a receiving member (51) movably disposed in the accommodating chamber (501) in the second direction through the opening (512), wherein the receiving member (51) has an initial position and a mounting position relatively disposed; and
a first limit structure (60) disposed between the receiving member (51) and a chamber wall of the accommodating chamber (501);
wherein when the receiving member (51) is in the initial position, the receiving member (51) is capable of being fixedly connected to the sampling connector; when the receiving member (51) is in the mounting position, the first limit structure (60) is capable of limiting displacement of the receiving member (51) relative to the accommodating chamber (501) in the second direction, and the first direction is perpendicular to the second direction.

9. The information sampling component according to claim 8, **characterized in that** the first limit structure (60) comprises a limit protrusion (61) and a limit groove (62), the limit protrusion (61) is provided on one of a bottom wall of the accommodating chamber (501) or a side of the receiving member (51) corresponding to the bottom wall, the limit groove (62) is provided on another of the bottom wall of the accommodating chamber (501) or the side of the receiving member (51) corresponding to the bottom wall, and the limiting protrusion (61) and the limit groove (62) are snap-fitted with each other to limit the displacement of the receiving member (51) when the receiving member (51) is in the mounting position; and
the housing (50) comprises:
a cover (52) having a first connecting portion; and
a base (53) having a second connecting portion, wherein the cover (52) is detachably connected to the base (53) through mutual cooperation between the first connecting portion and the second connecting portion, the cover (52) and the base (53) are connected to form the accommodating cavity (501) and the opening (512), and the limit protrusion (61) is located on the base (53).

10. The information sampling component according to claim 9, **characterized in that** the first connecting portion comprises a first hook (131), the first hook (131) is provided at a side of the cover (52) away from the opening (512), the second connecting portion comprises a first snap groove (542) provided corresponding to the first hook (131), and the first hook (131) is snap-fitted with the first snap groove (542) to limit displacement of the cover (52) relative to the base (53) in the first direction.

11. The information sampling component according to claim 10, **characterized in that** the first connecting portion further comprises a second hook (532), the second hook (532) is provided on a side wall of at least one of a first side or a second side of the cover (52) extending in the second direction, the second connecting portion further comprises a second snap groove (543) provided corresponding to the second hook (532), and the second hook (532) is snap-fitted with the second snap groove (543) to limit displacement of the cover (52) relative to the base (53) in the third direction.

12. The information sampling component according to claim 11, **characterized in that** the first connecting portion comprises a plurality of first hooks (131), the second connecting portion comprises a plurality of first snap grooves (542), the plurality of first hooks (131) and the plurality of first snap grooves (542) are each arranged at intervals along the first direction; and
the first hook (131) comprises a first connecting section (5311) and a second connecting section (5312) connected in sequence and angularly arranged, the second hook (532) comprises a third connecting section (5321) and a fourth connecting section (5322) connected in sequence and angularly arranged, and an included angle between the first connecting section (5311) and the second connecting section (5312) is the same as an included angle between the third connecting section (5321) and the fourth connecting section (5322).

13. The information sampling component according to claim 9, **characterized in that** the information sampling component further comprises a second limit structure (70), the second limit structure (70) is located between the cover (52) and the base (53), and the second limit structure (70) is capable of limiting displacement of the cover (52) relative to the base (53) in the second direction.

14. The information sampling component according to any one of claims 9 to 13, **characterized in that** an inner wall of a side of the cover (52) toward the base (53) further includes an avoidance groove (533), and a part of the sampling connector is located in the avoidance groove (533) when the receiving member (51) is in the mounting position.

15. A battery module, **characterized by** comprising:
the information sampling component according to any one of claims 7 to 14; and
a battery pack electrically connected to the information sampling component.
